# DEMANDE DE BREVET EUROPEEN

(11) **EP 3 797 652 A1**
(43) Date de publication de la demande: **31.03.2021**
(21) Numéro de dépôt: 20198519.9
(22) Date de dépôt: 25.09.2020
(51) Int. Cl.: A47J 19/02

(54) **DISPOSITIF D'INTRODUCTION D'ALIMENTS SÉCURISÉ ET APPAREIL DE PRÉPARATION CULINAIRE COMPORTANT UN TEL DISPOSITIF**

(30) Priorité: 27.09.2019 FR 1910680
(71) Demandeur: SEB S.A., 69130 Ecully (FR)
(72) Inventeur: RAGOT, Didier, 72100 LE MANS (FR); FERRON, Jean-Baptiste, 53940 SAINT-BERTHEVIN (FR)
(74) Mandataire: SEB Développement

(57) **Abrégé**

L'invention concerne un dispositif d'introduction d'aliments (1) pour un appareil (100) comprenant une enceinte de travail (106) recevant un outil rotatif (102). Le dispositif d'introduction d'aliments (1) comprend une goulotte (4) d'introduction d'aliments comprenant une première ouverture (9) et un premier conduit (13) permettant d'acheminer les aliments de la première ouverture (9) jusqu'à l'enceinte (106). Un premier clapet (15) est monté en translation entre une première position d'obturation de l'ouverture (9) et une deuxième position de libération de l'ouverture (9). Un deuxième clapet (16) est monté à pivotement entre une première position de libération du premier conduit (9) et une deuxième position d'obturation du premier conduit (9). Au moins un dispositif de transmission (17a) est agencé entre le premier clapet (15) et le deuxième clapet (16) pour que la translation du premier clapet (15) de sa première position vers sa deuxième position entraîne le pivotement du deuxième clapet (16) de sa première position vers sa deuxième position et, inversement de sa deuxième position vers sa première position.

## Description

### Domaine technique

La présente invention concerne les appareils de préparation culinaire qui comprennent un outil rotatif agencé dans une enceinte de travail et un dispositif d'introduction d'aliments muni d'une goulotte d'acheminement des aliments jusqu'à l'enceinte de travail.

L'invention porte tout particulièrement sur le dispositif d'introduction d'aliments d'un tel appareil, lequel comporte un système de sécurité qui empêche l'accès avec les mains à l'outil rotatif en passant par la goulotte d'acheminement.

Une mise en oeuvre particulière d'un tel appareil concerne un pressoir pour la préparation de jus de fruits et/ou légumes.

### Etat de la technique

Les appareils de préparation culinaire du type pressoir sont bien connus. Un tel appareil comprend un corps définissant une enceinte de travail et un dispositif d'introduction d'aliments muni d'une goulotte d'introduction d'aliments. Un outil rotatif du type vis de pressage est logé dans l'enceinte de travail. La goulotte comprend une ouverture d'introduction des aliments et un conduit d'acheminement des aliments jusqu'à l'enceinte de travail. L'ouverture et le conduit sont dimensionnés pour permettre l'insertion de fruits et/ou légumes entiers ou coupés en gros morceaux.

Afin d'éviter que l'utilisateur insert une de ses mains dans le conduit, par exemple pour pousser les aliments, le dispositif d'introduction d'aliments sur un tel appareil peut être équipé d'un système de sécurité.

Selon une première réalisation connue du système de sécurité sur le dispositif d'introduction d'aliments, celle-ci comporte deux clapets pivotants. Le premier clapet est monté à pivotement entre une première position d'obturation de l'ouverture et une deuxième position de libération de l'ouverture. De même, le deuxième clapet est monté à pivotement entre une première position de libération du conduit et une deuxième position d'obturation du conduit. Le deuxième clapet se situe dans la première position lorsque le premier clapet se situe dans la première position, de même avec les deuxièmes positions.

On citera par exemple les documents suivants présentant les caractéristiques d'une telle réalisation du système de sécurité : EP2810567B1 ; CN106805727A ; CN204520245U ; CN204734315U ; CN205214941U ; KR20150130799A.

Dans le brevet européen EP2810567B1, les deux clapets sont formés d'une seule et même pièce montée à pivotement selon un axe, les deux clapets étant plus ou moins disposés en équerre l'un vis-à-vis de l'autre.

Dans la demande de brevet chinois CN106805727A et dans le modèle d'utilité chinois CN205214941U, les deux clapets sont formés d'une seule et même pièce montée à pivotement selon un axe, les deux clapets étant disposés dans un même plan en opposition, un dispositif de transmission par engrenage permettant de faire pivoter ladite pièce.

Dans les modèles d'utilité chinois CN204520245U et CN204734315U et dans la demande de brevet coréen KR20150130799A, les deux clapets sont constitués de deux pièces distinctes montées à pivotement selon deux axes respectifs. En outre, un dispositif de transmission permet de déplacer simultanément les deux clapets de leurs premières positions vers leurs deuxièmes positions, et inversement, en pivotant lesdits clapets d'un angle de 90° entre l'horizontale et la verticale.

Dans la demande de brevet coréen KR20150130799A, le dispositif de transmission comprend une pièce de transmission activée en va-et-vient verticalement, la pièce de transmission comprenant deux doigts formant des cames qui appuient respectivement sur les extrémités pivotantes des deux clapets. Lorsque la pièce de transmission monte, le premier clapet pivote à l'horizontale et le deuxième clapet pivote simultanément à la verticale ; inversement, lorsque la pièce de transmission descend.

Dans le modèle d'utilité chinois CN204520245U, le dispositif de transmission comprend une bielle verticale dont les extrémités sont montées pivotantes vis-à-vis de deux bras assujettis respectivement aux deux clapets. Le pivotement du premier clapet de l'horizontale à la verticale entraîne simultanément le pivotement du deuxième clapet de la verticale à l'horizontale par l'intermédiaire de la bielle.

Dans le modèle d'utilité chinois CN204734315U, le dispositif de transmission comprend une pièce de butée assujettie à l'extrémité pivotante du premier clapet et prenant appui en-dessous de l'extrémité pivotante du deuxième clapet, sur une face externe dudit deuxième clapet. Le pivotement du premier clapet de l'horizontal à la verticale permet à la pièce de butée d'entraîner simultanément le pivotement du deuxième clapet de la verticale à l'horizontale ; le pivotement du premier clapet de la verticale à l'horizontale assure le dégagement de la pièce de butée vis-à-vis de la face externe du deuxième clapet, ce qui permet audit deuxième clapet de pivoter de l'horizontale à la verticale uniquement sous l'effet de la gravité et des fruits et légumes appuyant sur ce deuxième clapet.

Selon une deuxième réalisation connue du système de sécurité sur le dispositif d'introduction d'aliments et objet du modèle d'utilité chinois CN204950498U, celle-ci comporte deux clapets. Le premier clapet est monté en translation entre une première position d'obturation de l'ouverture et une deuxième position de libération de l'ouverture. De même, le deuxième clapet est monté en translation entre une première position de libération du conduit et une deuxième position d'obturation du conduit, ce deuxième clapet disposant en outre d'une partie pivotante qui est escamotée dans la première position de libération du conduit. Le deuxième clapet se situe dans la première position lorsque le premier clapet se situe dans la première position, de même avec les deuxièmes positions. Le premier clapet et le deuxième clapet sont assujettis, le deuxième clapet étant disposé avec un espacement, en-dessous du premier clapet et avec un décalage dans le sens du coulissement par rapport audit premier clapet. Lorsque le premier clapet et le deuxième clapet sont translatés dans leurs deuxièmes positions, l'aliment peut être introduit par l'ouverture et reposer sur ledit deuxième clapet qui a sa partie pivotante déployée. Lorsque le premier clapet translate vers sa première position, le deuxième clapet translate également vers sa première position, la partie pivotante dudit deuxième clapet s'escamotant derrière une paroi qui retient l'aliment et lui permet de tomber dans le conduit.

Selon une troisième réalisation connue du système de sécurité sur le dispositif d'introduction d'aliments et objet du modèle d'utilité chinois CN205285935U, ledit système de sécurité comporte un tiroir à fond ouvert monté en translation dans un couvercle entre une première position dans laquelle le tiroir présente une ouverture supérieure agencée en regard d'une ouverture supérieure du couvercle et une deuxième position dans laquelle le tiroir présente une ouverture inférieure agencée en regard d'un conduit débouchant dans l'enceinte de travail. Le conduit est déporté de l'ouverture du couvercle et communique avec celle-ci par l'intermédiaire du tiroir faisant office de sas.

Selon une quatrième réalisation connue du système de sécurité sur le dispositif d'introduction d'aliments et objet du modèle d'utilité chinois CN205903157U, ledit système de sécurité comporte deux clapets assujettis et disposés en équerre l'un par rapport à l'autre, les deux clapets étant montés en translation verticale sur le corps du dispositif d'introduction. Le premier clapet translate entre une première position d'obturation de l'ouverture et une deuxième position de libération de l'ouverture et, de même, le deuxième clapet translate entre une première position de libération du conduit et une deuxième position d'obturation du conduit, le deuxième clapet se situant dans la première position lorsque le premier clapet se situe dans la première position, de même avec les deuxièmes positions.

Selon une cinquième réalisation connue du système de sécurité sur le dispositif d'introduction d'aliments et objet du modèle d'utilité chinois CN207940580U, ledit système de sécurité comporte un fourreau monté coulissant sur le conduit entre une première position d'obturation de l'ouverture et une deuxième position de libération de l'ouverture. Le système de sécurité comporte un clapet monté pivotant entre une première position de libération du conduit et une deuxième position d'obturation du conduit. Le coulissement du fourreau de sa première position vers sa deuxième position permet audit fourreau de prendre appui sur un doigt assujetti au clapet de sorte à pivoter ledit clapet de sa première position vers sa deuxième position. Inversement, le coulissement du fourreau de sa deuxième position vers sa première position permet de dégager ledit fourreau du doigt de sorte à pivoter sous l'effet de la gravité ledit clapet de sa deuxième position vers sa première position.

### Résumé de l'invention

La présente invention met en œuvre une alternative de conception d'un système de sécurité sur le dispositif d'introduction d'aliments, ledit système de sécurité étant équipé de deux clapets dont le premier clapet est monté en translation entre une première position d'obturation de l'ouverture et une deuxième position de libération de l'ouverture et entraîne le déplacement du deuxième clapet entre une première position de libération du conduit et une deuxième position d'obturation du conduit. La présence d'un premier clapet monté en translation, comme cela est le cas pour le système de sécurité mis en oeuvre dans l'antériorité CN204950498U, offre une manipulation aisée du premier du dispositif d'introduction d'aliments lors de l'utilisation de l'appareil de préparation culinaire. Toutefois, selon cette antériorité, l'aliment risque d'être pris en cisaillement entre l'ouverture et le premier clapet durant la translation dudit premier clapet vers sa position d'obturation de l'ouverture, lorsque ledit aliment est un peu trop volumineux. En outre, le dispositif d'introduction d'aliments peut s'encrasser plus rapidement du fait que l'aliment peut frotter et s'écraser légèrement contre les parois internes dudit système de sécurité durant le déplacement du premier clapet vers sa première position d'obturation de l'ouverture. La présente invention vise à pallier ces inconvénients ; elle a en effet pour objectif de faciliter l'introduction de l'aliment dans le conduit en évitant ces problèmes de cisaillement et d'écrasement de l'aliment durant la translation du premier clapet vers sa position d'obturation de l'ouverture.

A ce titre, l'invention porte sur un dispositif d'introduction d'aliments pour appareil de préparation culinaire. L'appareil comprend une enceinte de travail dans laquelle est logé un outil rotatif, par exemple une vis de pressage permettant d'extraire du jus des aliments ou des couteaux rotatifs permettant de hacher ou broyer des aliments. Le dispositif d'introduction d'aliments comprend une goulotte d'introduction d'aliments qui comprend une première ouverture permettant d'introduire les aliments et un premier conduit débouchant à une première extrémité supérieure sur la première ouverture et à une première extrémité inférieure sur l'enceinte de travail, pour acheminer lesdits aliments de la première ouverture jusqu'à l'enceinte de travail. Le dispositif d'introduction d'aliments comprend également un premier clapet monté en translation par rapport à la goulotte selon un axe de translation entre une première position d'obturation de la première ouverture et une deuxième position de libération de la première ouverture. De préférence, cet axe de translation est disposé horizontalement ou avec une légère inclinaison par rapport à l'horizontal.

Selon l'invention, le dispositif d'introduction d'aliments comprend un deuxième clapet monté à pivotement par rapport à la goulotte selon un premier axe de rotation entre une première position de libération du premier conduit et une deuxième position d'obturation au moins partielle du premier conduit. On entend par obturation « au moins partielle », le fait que le deuxième clapet peut éventuellement comporter une encoche, comme cela sera décrit ci-après. De préférence, ce premier axe de rotation est disposé horizontalement et perpendiculairement à l'axe de translation du premier clapet.

En outre, selon l'invention, le dispositif d'introduction d'aliments comprend au moins un dispositif de transmission agencé entre le premier clapet et le deuxième clapet et configuré pour que la translation du premier clapet de sa première position vers sa deuxième position entraîne le pivotement du deuxième clapet de sa première position vers sa deuxième position et, inversement, pour que la translation du premier clapet de sa deuxième position vers sa première position entraîne le pivotement du deuxième clapet de sa deuxième position vers sa première position.

Ainsi, lorsque le premier clapet est translaté vis-à-vis de la goulotte dans sa deuxième position de libération de la première ouverture, l'aliment peut être introduit par ladite première ouverture et posé sur le deuxième clapet qui est disposé dans sa deuxième position d'obturation du premier conduit et positionné plus ou moins horizontalement ou avec une légère inclinaison, ce qui lui permet de réceptionner ledit aliment. Durant la translation du premier clapet vers sa première position d'obturation de la première ouverture, ladite translation s'effectuant plus ou moins horizontalement, le dispositif de transmission actionne le deuxième clapet qui pivote vers le bas vis-à-vis de la goulotte, ce qui permet à l'aliment posé sur ledit deuxième clapet de descendre naturellement avec celui-ci dans le premier conduit et par rapport au premier clapet, évitant ainsi que ledit aliment soit pris en cisaillement entre la première ouverture et le premier clapet. Cette descente naturelle (par gravité) de l'aliment avec le deuxième clapet durant son pivotement vers sa première position de libération du premier conduit évite en outre de pousser et d'écraser ledit aliment contre des parois internes pour lui permettre d'accéder audit premier conduit puis d'être acheminé par gravité jusqu'à l'enceinte de travail. Ainsi, l'invention garantit le bon fonctionnement du dispositif d'introduction d'aliments durant la manipulation du premier clapet tout en évitant l'encrassement de parois internes difficilement accessibles dudit dispositif d'introduction d'aliments, seul la goulotte et les clapets devant être nettoyés à l'eau après utilisation.

Selon le dispositif d'introduction d'aliments objet de l'invention, le au moins un dispositif de transmission est un dispositif de transmission à crémaillère. Cet au moins un dispositif de transmission comprend une crémaillère agencée parallèlement à l'axe de translation et assujettie au premier clapet, une première roue dentée montée rotative selon le premier axe de rotation et assujettie au deuxième clapet, la crémaillère engrenant directement ou par l'intermédiaire d'un mécanisme de transmission avec la première roue dentée. Des variantes du dispositif de transmission pourraient être envisagées dans le cadre de l'invention, sans nécessairement utiliser de crémaillère.

De préférence, la crémaillère engrène avec la première roue dentée par l'intermédiaire d'un mécanisme de transmission. Selon une réalisation préférentielle, ce mécanisme de transmission comprend une deuxième roue dentée montée rotative selon un deuxième axe de rotation et engrenant avec la crémaillère, une troisième roue dentée montée rotative selon ledit deuxième axe de rotation et assujettie à la deuxième roue dentée et une quatrième roue dentée montée rotative selon un troisième axe de rotation et engrenant avec la troisième roue dentée, d'une part, et avec la première roue dentée, d'autre part. D'autres mécanismes de transmission restent envisageables dans le cadre de l'invention selon les positions et orientations des premier et deuxième clapets.

Selon une réalisation du dispositif d'introduction d'aliments, le au moins un dispositif de transmission comprend un mécanisme ralentisseur permettant de freiner la translation du premier clapet et le pivotement du deuxième clapet. Cela permet d'éviter un déplacement trop brutal des deux clapets de sorte à éviter des chocs en fin de course desdits clapets. De préférence, le mécanisme ralentisseur est un ralentisseur à graisse agencé sur l'une des roues dentées précitées.

Selon une réalisation du dispositif d'introduction d'aliments, le au moins un dispositif de transmission est configuré pour que le deuxième clapet pivote d'un angle de l'ordre de 120° entre sa première position et sa deuxième position lors d'une translation du premier clapet entre sa première position et sa deuxième position.

Selon une réalisation du dispositif d'introduction d'aliments, la première ouverture et le premier conduit sont dimensionnés pour que le deuxième clapet libère un passage du premier conduit d'une section correspondant à au moins 90% de la section de la première ouverture, de préférence 100%, lorsque le premier clapet obture ladite première ouverture. Cela permet d'assurer une descente convenable des aliments dans le premier conduit.

Selon une réalisation du dispositif d'introduction d'aliments, celui-ci comprend, d'une part, un corps ouvert à une extrémité supérieure et incorporant le premier conduit et, d'autre part, un capot fermant partiellement l'extrémité supérieure dudit corps de sorte à définir la première ouverture à l'extrémité supérieure dudit corps. De préférence, selon cette réalisation du dispositif d'introduction d'aliments, le premier clapet, le deuxième clapet et le au moins un dispositif de transmission sont portés par le corps, au niveau de sa jonction avec le capot, ledit capot permettant de maintenir monté en translation le premier clapet. De préférence, selon cette réalisation du dispositif d'introduction d'aliments, le capot comprend une fente dans laquelle coulisse le premier clapet durant sa translation.

Selon une réalisation du dispositif d'introduction d'aliments, la goulotte comprend une deuxième ouverture de plus petite dimension que la première ouverture et un deuxième conduit rectiligne débouchant à une deuxième extrémité supérieure sur la deuxième ouverture et à une deuxième extrémité inférieure à proximité de la première extrémité inférieure du premier conduit. En outre, le deuxième clapet obture au moins partiellement le deuxième conduit dans sa première position et libère le deuxième conduit dans sa deuxième position. Le deuxième clapet peut éventuellement comporter une encoche permettant l'insertion d'un poussoir au travers dudit deuxième clapet dans sa première position, en insérant ledit poussoir par la deuxième ouverture. Cela aide à introduire les aliments dans l'enceinte de travail, en cas de bourrage de ces aliments dans le premier conduit.

De préférence, lorsque le dispositif d'introduction d'aliments comprend un corps et un capot tels que précités et que la goulotte comprend une deuxième ouverture et un deuxième conduit tels que précités, ledit corps incorpore ledit deuxième conduit et ledit capot comporte un premier orifice permettant de former la deuxième ouverture à l'extrémité supérieure du corps.

Selon une réalisation du dispositif d'introduction d'aliments muni d'une deuxième ouverture et d'un deuxième conduit tels que précité, le premier clapet comprend un deuxième orifice qui correspond avec le premier orifice du capot lorsque ledit premier clapet est dans la première position d'obturation de la première ouverture.

Selon une réalisation du dispositif d'introduction d'aliments, celui-ci comprend un système de butée limitant la translation du premier clapet entre sa première position et sa deuxième position. Cela permet d'arrêter précisément le premier clapet et le deuxième clapet dans leurs premières et deuxièmes positions.

D'autres caractéristiques sont envisageables sur le dispositif d'introduction d'aliments, dans le cadre de l'invention. Le dispositif d'introduction d'aliments peut par exemple comprendre un système de maintien du premier clapet dans sa première position. Le dispositif d'introduction d'aliments peut aussi comprendre un système de rappel du premier clapet dans sa deuxième position lorsque ledit système de maintien est désactivé, pour assurer une libération automatique de la première ouverture lorsque l'utilisateur désactive ledit système de maintien.

L'invention concerne aussi un appareil de préparation culinaire comprenant un réceptacle, un outil rotatif agencé dans le réceptacle et un dispositif d'introduction d'aliments comportant un couvercle prévu pour fermer le réceptacle. En outre, le dispositif d'introduction d'aliments comprend l'une et/ou l'autre des caractéristiques précitées. Selon une forme de réalisation préférée, un mécanisme d'assemblage à baïonnette est agencé entre le réceptacle et le dispositif d'introduction d'aliments, la mise en place dudit dispositif d'introduction d'aliments sur le réceptacle permettant de définir l'enceinte de travail dans laquelle est logé l'outil rotatif.

Selon une réalisation, l'appareil de préparation culinaire est un pressoir, également appelé extracteur de jus, l'outil rotatif étant une vis de pressage permettant d'extraire du jus des aliments, notamment des fruits et/ou légumes. La vis de pressage est agencée dans un filtre logé dans le réceptacle.

On pourrait envisager d'autres appareils de préparation culinaire dans le cadre de l'invention, par exemple un appareil pour hacher ou broyer les aliments, l'outil rotatif étant alors constitué de couteaux rotatifs.

### Brève description des figures

La description suivante met en évidence les caractéristiques et avantages de la présente invention. Cette description s'appuie sur des figures, parmi lesquelles :
[Fig. 1] La figure 1 illustre une vue d'ensemble d'un dispositif d'introduction d'aliments selon l'invention, montrant un premier clapet dans une première position ;
[Fig. 2] La figure 2 illustre une vue en coupe de côté du dispositif d'introduction d'aliments de la figure 1, montrant le premier clapet dans sa première position et un deuxième clapet dans une première position également ;
[Fig. 3] La figure 3 illustre une vue d'ensemble du dispositif d'introduction d'aliments de la figure 1, avec le premier clapet positionné dans une deuxième position ;
[Fig. 4] La figure 4 illustre une vue en coupe de côté du dispositif d'introduction d'aliments de la figure 3, montrant le premier clapet dans sa deuxième position et le deuxième clapet dans une deuxième position également ;
[Fig. 5] La figure 5 illustre le premier clapet entrainant le deuxième clapet par le biais de deux dispositifs de transmission agencés entre les côtés latéraux respectifs desdits clapets ;
[Fig. 6] La figure 6 met en évidence l'agencement du premier clapet et d'un des deux dispositifs de transmission sur la partie supérieure d'un corps du dispositif d'introduction d'aliments ;
[Fig. 7] La figure 7 illustre la partie supérieure du corps du dispositif d'introduction d'aliments ;
[Fig.8] La figure 8 illustre une pièce de maintien servant au montage d'un dispositif de transmission sur un côté latéral de la partie supérieure du corps du dispositif d'introduction d'aliments, ladite pièce de maintien servant également au guidage en translation du premier clapet ;
[Fig. 9] La figure 9 illustre le deuxième clapet, sur les côtés latéraux duquel sont disposées des premières roues dentées ;
[Fig. 10] La figure 10 illustre le premier clapet, sur les côtés latéraux duquel sont agencées des crémaillères ;
[Fig. 11] La figure 11 illustre un axe intermédiaire comportant des deuxièmes et troisièmes roues dentées des deux dispositifs de transmission de la figure 5 ;
[Fig. 12] La figure 12 illustre un capot permettant de fermer en partie le côté supérieur du corps du dispositif d'introduction d'aliments ;
[Figure 13] La figure 13 illustre un appareil de préparation culinaire de type pressoir à jus, lequel comprend un dispositif d'introduction d'aliments selon l'invention ;
[Fig. 14] La figure 14 illustre un ralentisseur à graisse sur lequel est montée une roue dentée d'un dispositif de transmission.

### Description détaillée

Dans la suite de la description, le terme appareil est utilisé pour désigner un appareil de préparation culinaire comportant un dispositif d'introduction d'aliments selon l'invention, sans indication contraire.

Dans la suite de la description, les termes « horizontal », « vertical », « inférieur », « supérieur », « longitudinal », « transversal », « haut », « bas », qui pourraient être employés, le seront en considération de la position de l'appareil reposant sur un plan de travail, en situation d'usage, avec le dispositif d'introduction d'aliments en place sur ledit appareil.

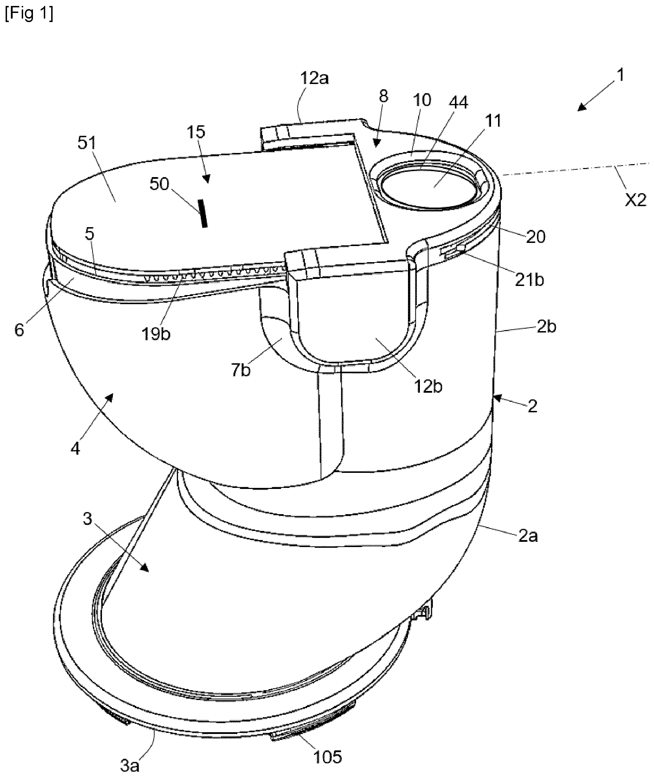

En regard des figures 1 à 4, le dispositif d'introduction d'aliments 1 comprend un corps 2 comportant un tronçon inférieur 2a et un tronçon supérieur 2b. Le dispositif d'introduction d'aliments 1 comprend un couvercle 3 prévu pour fermer un réceptacle, le tronçon inférieur 2a du corps 2 étant issu du couvercle 3. Le corps 2 définit une goulotte 4 pour l'introduction des aliments, cette goulotte 4 communiquant avec une face inférieure 3a du couvercle 3.

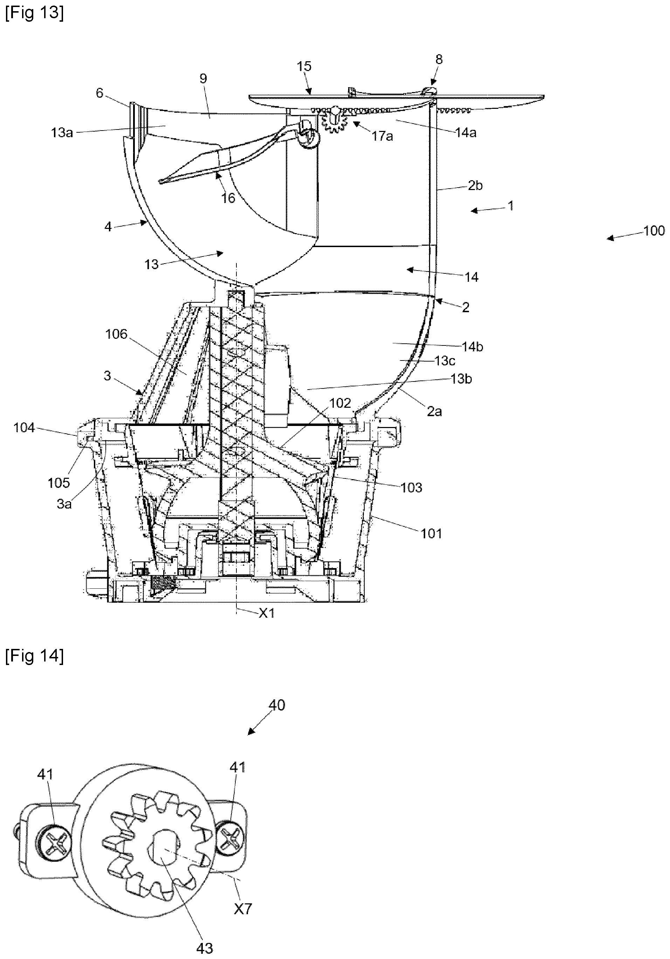

En regard de la figure 13, le dispositif d'introduction d'aliments 1 constitue une pièce d'un appareil 100 qui comporte un réceptacle 101 et un outil rotatif 102 tournant selon un axe de rotation vertical X1. Sur cette figure 13, l'appareil 100 est un extracteur de jus, également appelé pressoir, l'outil rotatif 102 étant une vis de pressage agencée dans un filtre 103 logé dans le réceptacle 101. D'autres outils rotatifs pourraient être envisagés, tels que des couteaux rotatifs d'un appareil du type hachoir ou mixeur. Le couvercle 3 se fixe sur une partie supérieure 104 du réceptacle 101 grâce à un mécanisme d'assemblage à baïonnette 105, bien connu sur les appareils de préparation culinaire. La fixation du couvercle 3 sur le réceptacle 101, au-dessus de l'outil rotatif 102, permet de constituer une enceinte de travail 106 incorporant ledit outil rotatif 102 et communiquant avec la goulotte 4 du dispositif d'introduction d'aliments 1.

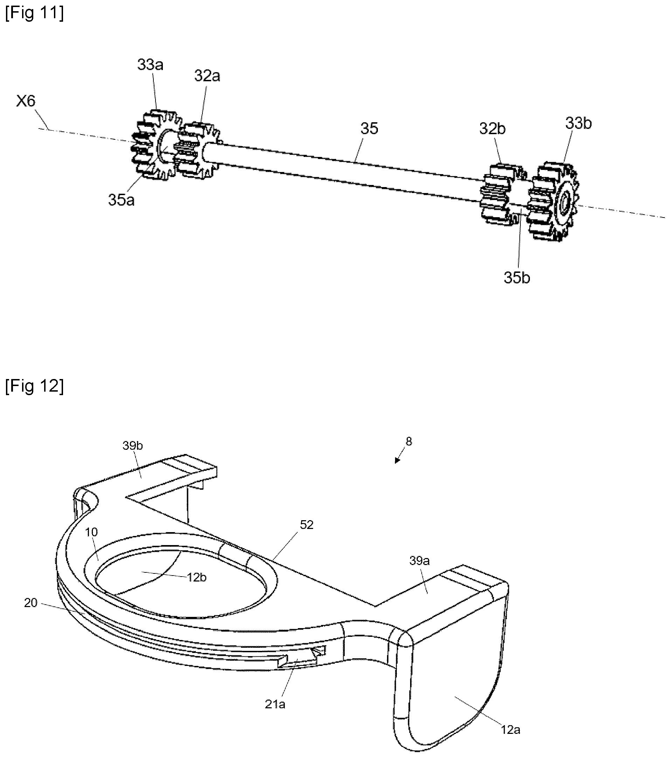

En regard des figures 1 à 4, 6, 7 et 12, le corps 2 présente une embouchure 5 débouchant à son extrémité supérieure 6. Deux oreilles 7a, 7b latérales sont agencées à l'extérieur de l'extrémité supérieure 6 du corps 2. Le dispositif d'introduction d'aliments 1 comprend également un capot 8 qui recouvre partiellement l'embouchure 5 lorsqu'il est assemblé avec l'extrémité supérieure 6 du corps 2, ce qui permet de ménager une première ouverture 9 sur la partie de l'embouchure 5 qui n'est pas recouverte par ledit capot 8. Cette première ouverture 9 a pour fonction de permettre l'introduction des aliments dans la goulotte 4. Le capot 8 comporte un orifice 10 qui définit une deuxième ouverture 11 sur l'embouchure 5 du corps 2. Cette deuxième ouverture 11 est de plus petite dimension que la première ouverture 9. Le capot 8 comporte également deux flasques 12a, 12b latérales qui se positionnent respectivement sur les deux oreilles 7a, 7b avec lesquelles ils coopèrent lorsque ledit capot 8 est emboîté sur l'extrémité supérieure 6 du corps 2.

En regard des figures 1 à 4 et 13, la goulotte 4 comporte la première ouverture 9 et la deuxième ouverture 11, une fois le capot 8 assemblé sur le corps 2. Cette goulotte 4 comprend également un premier conduit 13 et un deuxième conduit 14. Le premier conduit 13 présente une première extrémité supérieure 13a et une première extrémité inférieure 13b. Le premier conduit 13 débouche à sa première extrémité supérieure 13a sur la première ouverture 9. Lorsque le dispositif d'introduction d'aliments 1 est en place sur le réceptacle 101 de l'appareil 100, le premier conduit 13 débouche à sa première extrémité inférieure 13b sur l'enceinte de travail 106. Le deuxième conduit 14 présente une deuxième extrémité supérieure 14a et une deuxième extrémité inférieure 14b. Le deuxième conduit 14 débouche à sa deuxième extrémité supérieure 14a sur la deuxième ouverture 11 et à sa deuxième extrémité inférieure 14b sur le premier conduit 13, au niveau d'une partie coudée 13c dudit premier conduit 13, cette partie coudée 13c étant disposée à proximité de la première extrémité inférieure 13b débouchant sur l'enceinte de travail 106.

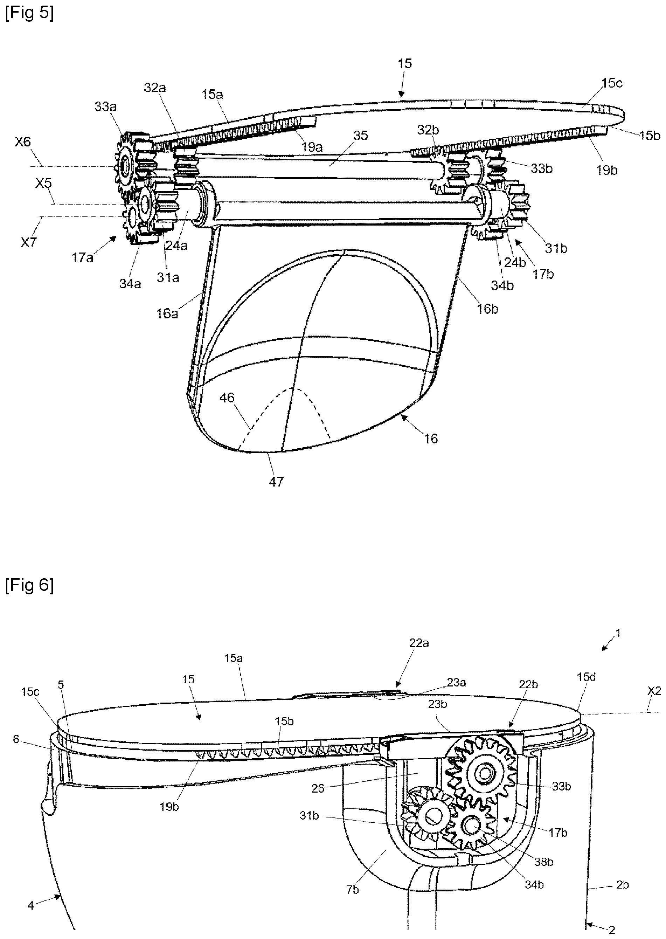

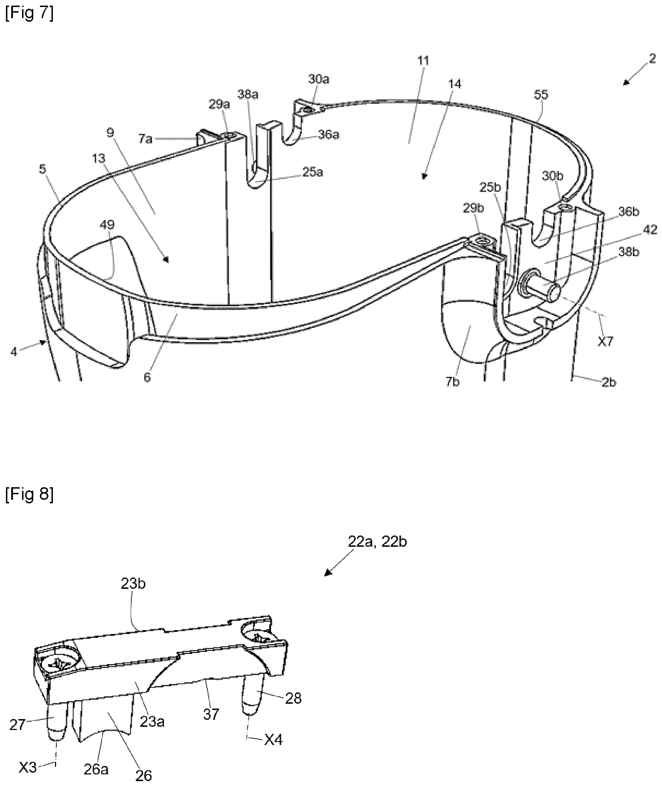

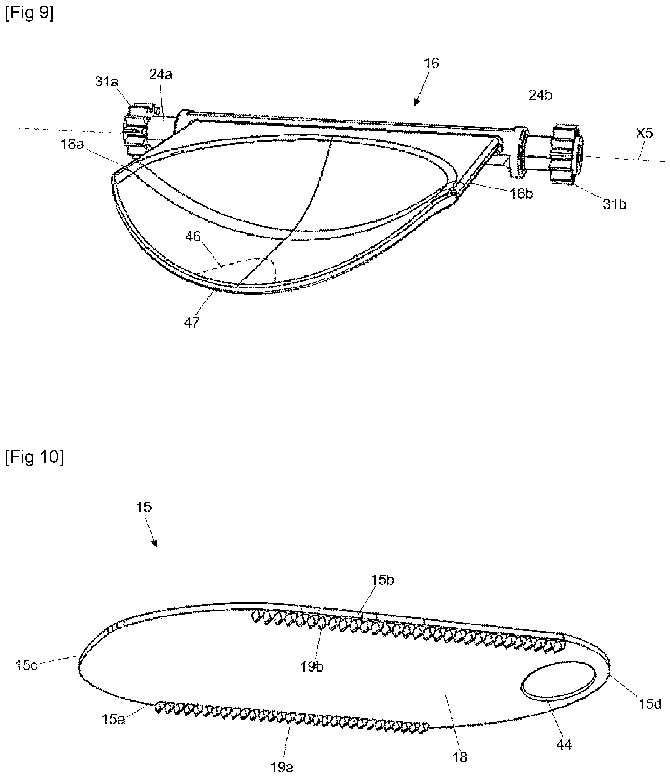

Le dispositif d'introduction d'aliments 1 comprend un premier clapet 15, un deuxième clapet 16 et deux dispositifs de transmission 17a, 17b qui sont agencés entre les côtés latéraux 15a, 15b du premier clapet 15 et les côtés latéraux 16a, 16b du deuxième clapet 16, comme l'illustrent notamment les figures 1 à 5. Le premier clapet 15 est monté en liaison glissière vis-à-vis de l'extrémité supérieure 6 du corps 2 et du capot 8, de sorte à translater par rapport à la goulotte 4 selon un axe de translation X2 qui s'étend plus ou moins horizontalement dans le sens de la longueur du premier clapet 15, comme l'illustrent notamment les figures 1 à 4. Comme l'illustre notamment la figure 10, le premier clapet 15 se présente préférentiellement sous la forme d'une plaque ayant ses deux extrémités longitudinales 15c, 15d arrondies. Le premier clapet 15 comprend une face inférieure 18 sur laquelle sont agencées, à proximité des côtés latéraux 15a, 15b, deux crémaillères 19a, 19b appartenant auxdits dispositifs de transmission 17a, 17b. Comme l'illustrent notamment les figures 1 à 4, 10 et 12, le capot 8 comprend une fente 20 au travers de laquelle passe le premier clapet 15 durant sa translation selon l'axe de translation X2. Cette fente 20 est munie sur ses côtés latéraux de deux encoches 21a, 21b qui reçoivent respectivement les deux crémaillères 19a, 19b durant la translation du premier clapet 15. Le dispositif d'introduction d'aliments 1 comprend également deux pièces de maintien 22a, 22b, comme l'illustrent notamment les figures 6 et 8. Ces pièces de maintien 22a, 22b présentent une conception symétrique selon un plan de symétrie passant par deux axes X3, X4. Ces pièces de maintien 22a, 22b présentent deux faces d'appui 23a, 23b qui s'étendent longitudinalement et parallèlement à l'axe de translation X2 du premier clapet 15. Comme illustré en figure 6, la première face d'appui 23a de la première pièce de maintien 22a est juxtaposée au premier côté latéral 15a du premier clapet 15 et la deuxième face d'appui 23b de la deuxième pièce de maintien 22b est juxtaposée au deuxième côté latéral 15b du premier clapet 15, ce qui assure le guidage en translation du premier clapet 15 selon l'axe de translation X2, vis-à-vis desdites deux pièces de maintien 22a, 22b.

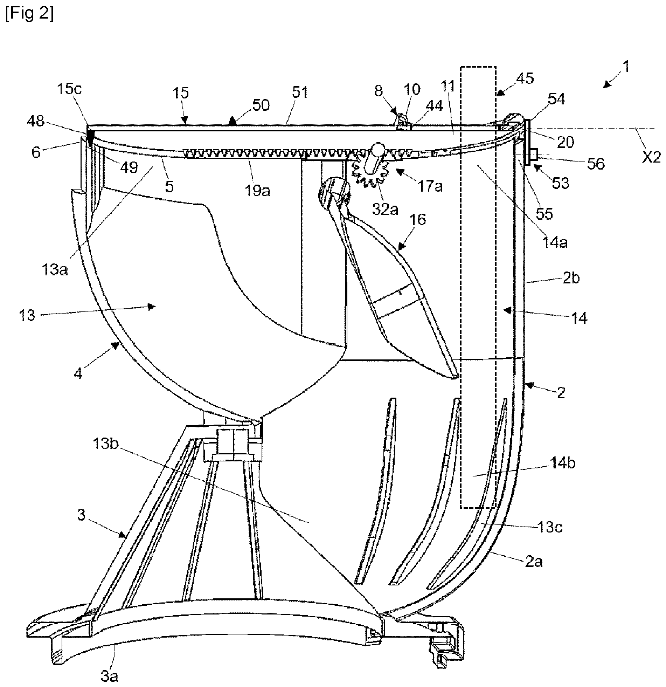

En regard notamment des figures 2 et 4 à 12, le deuxième clapet 16 est monté en liaison pivot selon un premier axe de rotation X5 vis-à-vis du l'extrémité supérieure 6 du corps 2, ce qui permet au deuxième clapet 16 de pivoter selon ce premier axe de rotation X5 par rapport à la goulotte 4. Pour cela, le deuxième clapet 16 comprend deux extrémités axiales 24a, 24b qui viennent se loger dans deux premiers paliers 25a, 25b agencés respectivement sur les oreilles 7a, 7b disposées à l'extrémité supérieure 6 du corps 2. Les pièces de maintien 22a, 22b comprennent une patte d'appui 26 dont l'extrémité inférieure incurvée 26a constitue une première portion de palier venant épouser et maintenir lesdites extrémités axiales 24a, 24b logées dans les premiers paliers 25a, 25b lorsque lesdites pièces de maintien 22a, 22b sont fixées sur les deux oreilles 7a, 7b du corps 2 au moyen de vis 27, 28 présentes sur lesdites pièces de maintien 22a, 22b et de trous taraudés 29a, 29b, 30a, 30b présents sur lesdites oreilles 7a, 7b.

En regard notamment des figures 5 à 11, chacun des deux dispositifs de transmission 17a, 17b comprend une première roue dentée 31a, 31b, les deux premières roues dentées 31a, 31b étant respectivement fixées aux deux extrémités axiales 24a, 24b du deuxième clapet 16 de sorte à tourner selon le premier axe de rotation X5 avec le deuxième clapet 16. Chacun des deux dispositifs de transmission 17a, 17b comprend également une deuxième 32a, 32b, une troisième 33a, 33b et une quatrième 34a, 34b roues dentées. Les deuxièmes roues dentées 32a, 32b et les troisièmes roues dentées 33a, 33b sont portées par un même arbre 35, au niveau de ses deux extrémités 35a, 35b qui viennent se loger dans deux deuxièmes paliers 36a, 36b agencés respectivement sur les oreilles 7a, 7b disposées à l'extrémité supérieure 6 du corps 2. Les pièces de maintien 22a, 22b comprennent une légère cavité inférieure 37 qui constitue une deuxième portion de palier venant épouser et maintenir lesdites extrémités 35a, 35b de l'arbre 35 logées dans les deuxièmes paliers 36a, 36b lorsque lesdites pièces de maintien 22a, 22b sont fixées sur les deux oreilles 7a, 7b du corps 2. Cela permet de monter l'arbre 35 en liaison pivot selon un deuxième axe de rotation X6 sur le corps 2, en disposant les deuxièmes roues dentées 32a, 32b à l'intérieur du corps 2 au niveau des deux oreilles 7a, 7b tandis que les troisièmes roues dentées 33a, 33b sont disposées à l'extérieur du corps 2, dans lesdites oreilles 7a, 7b. Les deuxièmes roues dentées 32a, 32b engrènent respectivement avec les deux crémaillères 19a, 19b sous le premier clapet 15. Ainsi, la translation du premier clapet 15 dans un sens ou dans l'autre selon l'axe de translation X2 entraîne la rotation des deuxièmes roues dentées 32a, 32b et des troisièmes roues dentées 33a, 33b dans un sens ou dans l'autre selon le deuxième axe de rotation X6. Les quatrièmes roues dentées 34a, 34b sont portées à pivotement par des plots circulaires 38a, 38b qui sont agencés sur le corps 2 à l'intérieur des deux oreilles 7a, 7b et qui définissent un trosième axe de rotation X7 de ces quatrièmes roues dentées 34a, 34b. Ces quatrièmes roues dentées 34a, 34b engrènent, d'une part, avec les troisièmes roues dentées 33a, 33b et, d'autre part, avec les premières roues dentées 31a, 31b. La mise en place des flasques 12a, 12b du capot 8 sur les oreilles 7a, 7b du corps 2 permet d'enfermer les premières roues dentées 31a, 31b, les troisièmes roue dentées 33a, 33b et les quatrièmes roues dentées 34a, 34b de sorte qu'elles ne soient pas accessibles. Le capot 8 comprend deux parties d'appui 39a, 39b qui maintiennent le premier clapet 15 pour participer à son guidage en translation selon l'axe de translation X2 et garantir un engrènement convenable des crémaillères 19a,19b avec les deuxièmes roues dentées 32a, 32b. Les premier, deuxième et troisième axes de rotation X5, X6, X7 sont parallèles entre eux et disposés perpendiculairement à l'axe de translation X2, l'axe de translation X2 et les premier, deuxième et troisième axes de rotation X5, X6, X7 étant de préférence tous horizontaux.

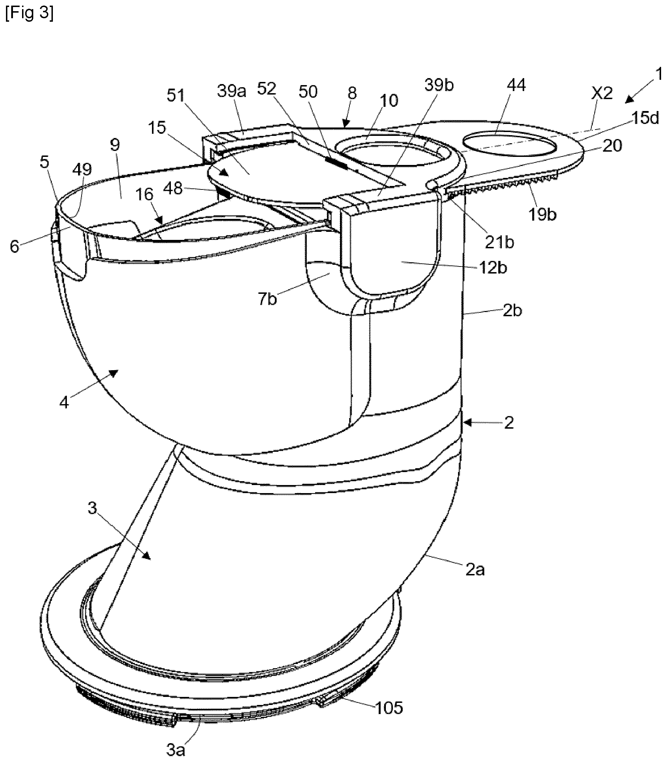

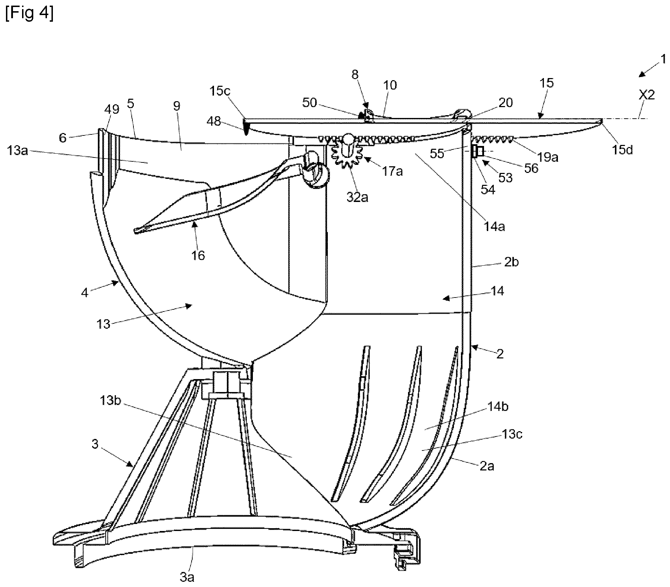

Comme l'illustrent les figures 1 à 4, le premier clapet 15 peut translater selon l'axe de translation X2 entre une première position d'obturation de la première ouverture 9 (figures 1 et 2) et une deuxième position de libération de cette première ouverture 9 (figures 3 et 4) et, le deuxième clapet 16 peut pivoter selon le premier axe de rotation X5 entre une première position de libération du premier conduit 13 (figures 1 et 2) et une deuxième position d'obturation de la première extrémité supérieure 13a du premier conduit 13 (figures 3 et 4). Lorsque le premier clapet 15 est dans sa première position, le deuxième clapet 16 est aussi dans sa première position ; de même avec les deuxièmes positions du premier clapet 15 et du deuxième clapet 16. Lorsque le premier clapet 15 et le deuxième clapet 16 sont dans leurs premières positions, le deuxième clapet 16 libère un passage du premier conduit 13 d'une section correspondant à au moins 90% de la section de la première ouverture 9, de préférence 100%, pour faciliter la descente des aliments dans la goulotte 4.

De préférence, les roues dentées 31a, 31b, 32a, 32b, 33a, 33b, 34a, 34b et les crémaillères 19a, 19b des dispositifs de transmission 17a, 17b sont dimensionnées pour assurer une transmission différentielle entre le premier clapet 15 et le deuxième clapet 16. Ainsi la translation du premier clapet 15 entraine le pivotement du deuxième clapet 16 avec une amplification dudit pivotement, de sorte à limiter la course en translation du premier clapet 15 tout en assurant, préférentiellement, un pivotement du deuxième clapet 16 d'un angle de l'ordre de 120° entre sa première position et sa deuxième position. Ainsi, les dispositifs de transmission 17a, 17b sont choisis d'une part pour que lorsque le premier clapet 15 libère la première ouverture 9, le deuxième clapet 16 obture la première extrémité supérieure 13a du premier conduit 13 et se situe dans une position légèrement inclinée par rapport à l'horizontale et, d'autre part, pour que lorsque le premier clapet 15 obture la première ouverture 9, le deuxième clapet 16 libère le premier conduit 13 et forme un angle de plus ou moins 120° avec ledit premier clapet 15, ledit deuxième clapet 16 étant alors positionné en partie dans le passage du deuxième conduit 14. On pourrait prévoir un autre rapport d'amplification entre la translation du premier clapet 15 et le pivotement du deuxième clapet 16.

Chacun des dispositifs de transmission 17a, 17b peut éventuellement comporter un mécanisme ralentisseur, tel que par exemple un ralentisseur à graisse 40, tel qu'illustré sur la figure 14. Ces ralentisseurs à graisse 40 seront dans ce cas fixés par des vis de fixation 41 sur les parois internes latérales 42 des deux oreilles 7a, 7b en lieu-et-place des plots circulaires 38a, 38b ; ces ralentisseurs à graisse 40 comportent chacun un axe de ralentisseur à graisse 43 définit selon le troisième axe de rotation X7, les deux axes de ralentisseur à graisse 43 recevant et tournant avec les quatrièmes roues dentées 34a, 34b desdits dispositifs de transmission 17a, 17b. Ainsi, la translation du premier clapet 15 engendre le pivotement du deuxième clapet 16 en évitant des déplacements trop brusques desdits clapets 15, 16.

Sur les figures 1, 3 et 10 est schématisé un deuxième orifice 44 qui est agencé sur le premier clapet 15, ce deuxième orifice 44 correspondant avec le premier orifice 10 sur le capot 8 lorsque ledit premier clapet 15 est dans sa première position illustrée en figure 1, ce qui permet d'accéder à la deuxième ouverture 11 pour enfoncer un poussoir 45 (illustré en pointillés sur la figure 2) dans le deuxième conduit 14 afin de pousser les aliments se trouvant à proximité de la première extrémité inférieure 13b du premier conduit 13, jusque dans l'enceinte de travail 106 de l'appareil 100. Le deuxième clapet 16 obture partiellement le deuxième conduit 14 lorsqu'il se trouve dans sa première position, de sorte à permettre le passage dudit poussoir 45. On pourrait cependant prévoir une encoche 46 (illustrée en pointillés sur la figure 9) débouchant sur le bord 47 du deuxième clapet 16 afin de faciliter le passage du poussoir 45 dans le deuxième conduit 14 lorsque ledit deuxième clapet 16 est dans sa première position.

Sur la figure 9, le deuxième clapet 16 présente plus ou moins une forme incurvée comme une cuillère, mais d'autres formes pourraient être envisagées, par exemple une forme de spatule plate. La légère inclinaison du deuxième clapet 16 dans sa deuxième position et cette forme incurvée dudit deuxième clapet 16, telles qu'illustrées sur la figure 4, permettent avantageusement de poser un aliment entier ou un gros morceau d'aliment sur le deuxième clapet 16 en l'engageant suffisamment dans la première extrémité supérieure 13a du premier conduit 13, ce qui garantit contre les risques que le premier clapet 15 touche ledit aliment en entier ou en morceau lors de sa translation vers la première position.

Le dispositif d'introduction d'aliments 1 pourrait aussi comporter un système de rappel (non illustré) permettant de déplacer automatiquement le premier clapet 15 dans sa deuxième position de libération de la première ouverture 9 et, par conséquent, de déplacer le deuxième clapet 16 dans sa deuxième position d'obturation du premier conduit 13. Par exemple, ce système de rappel pourrait consister en deux ressorts (non illustrés) travaillant en compression ou en extension et étant agencés entre les côtés latéraux 15a, 15b du premier clapet 15 et les parties d'appui 39a, 39b du capot 8. Ce système de rappel pourrait encore consister en deux ressorts à spirale (non illustrés) agencés entre les extrémités axiales 24a, 24b du deuxième clapet 16 et les deux oreilles 7a, 7b sur le corps 2 pour ramener automatiquement le deuxième clapet 16 dans sa deuxième position et, par conséquent, le premier clapet 15 dans sa deuxième position. La présence éventuelle de ralentisseurs à graisse 40 tels que précités permettrait dans ce cas de compenser la force exercée par ledit système de rappel, afin que les déplacements du premier clapet 15 et du deuxième clapet 16 vers leurs deuxièmes positions se fassent lentement, sans choc.

Le dispositif d'introduction d'aliments 1 peut aussi comporter un système de butée qui limite la course en translation du premier clapet 15 entre sa première position et sa deuxième position. Ce système de butée pourrait par exemple comprendre un premier élément protubérant 48 agencé sur la face inférieure 18 du premier clapet 15, au niveau de son extrémité longitudinale 15c, comme schématisé en figures 2 à 4, ce premier élément protubérant 48 prenant appui sur une face interne 49 à l'extrémité supérieure 6 du corps 2 lorsque le premier clapet 15 est dans sa première position, comme le schématise la figure 2. Ce système de butée pourrait aussi comprendre, par exemple, un deuxième élément protubérant 50 agencé sur une face supérieure 51 du premier clapet 15 et prenant appui sur un bord 52 du capot 8 lorsque le premier clapet 15 atteint sa deuxième position, comme le schématise la figure 3.

Le dispositif d'introduction d'aliments 1 pourrait aussi comprendre un système de maintien 53, schématisé en figures 2 et 4, permettant de maintenir le premier clapet 15 dans sa première position d'obturation de la première ouverture 9. Ce système de maintien 53 pourrait par exemple comporter un loquet de verrouillage 54 agencé sur un bord arrière 55 du corps 2, au niveau de son extrémité supérieure 6, de sorte à fermer une partie de la fente 20 du capot 8 lorsque le premier clapet 15 est dans sa première position, ledit loquet de verrouillage 54 pouvant être actionné à pivotement, voire en translation verticale, au moyen d'un bouton de commande 56. Lorsque ce système de maintien 53 est désactivé, le loquet de verrouillage 54 étant dégagé de la fente 20 sur le capot 8, le système de rappel mentionné ci-avant assure alors le retour automatique du premier clapet 15 dans sa deuxième position de libération de la première ouverture 9.

Lors de l'utilisation de l'appareil 100 pour le pressage de fruits et/ou légumes, l'utilisateur actionne le bouton de commande 56 pour dégager le loquet de verrouillage 54 de la fente 20 du capot 8 et libérer le premier clapet 15, le système de rappel assurant alors la translation du premier clapet 15 jusqu'à ce que le deuxième élément protubérant 50 du premier clapet 15 vienne en butée contre le bord 52 du capot 8, ledit premier clapet 15 ayant alors atteint sa deuxième position où la première ouverture 9 est libérée, tandis que le deuxième clapet 16 obture la première extrémité supérieure 13a du premier conduit 13. L'utilisateur peut insérer des fruits et/ou aliments qui reposent sur le deuxième clapet 13 se trouvant dans sa deuxième position. L'utilisateur translate ensuite le premier clapet 15 dans sa première position d'obturation de la première ouverture 9, les dispositifs de transmission 17a, 17b permettant alors un pivotement plus rapide et plus important du deuxième clapet 16 pour libérer plus rapidement le premier conduit 13 et assurer la descente desdits fruits et/ou légumes dans ce premier conduit 13, avant même l'obturation de la première ouverture 9 par le premier clapet 15. Les fruits et/ou légumes atteignent alors l'enceinte de travail 106 où ils sont pressés par l'outil rotatif 102. En cas de bourrage dans le premier conduit 13, l'utilisateur peut introduire le poussoir 45 par la deuxième ouverture 11 afin de pousser lesdits fruits et/ou légumes vers l'enceinte de travail 106.

Des variantes sont envisageables dans le cadre de l'invention. La première ouverture 9 n'est pas nécessairement horizontale. Le premier clapet 15 n'est pas nécessairement positionné à l'horizontal, une inclinaison étant envisageable, de préférence inférieure ou égale à 30°. La deuxième position d'obturation au moins partielle de la première ouverture 9 par le deuxième clapet 16 n'est pas nécessairement avec une légère inclinaison comme sur la figure 4, un positionnement à l'horizontal étant envisageable, dans quel cas les dispositifs de transmission 17a, 17b seront déterminés pour amplifier plus fortement le pivotement du deuxième clapet 16 vers sa première position lors de la translation du premier clapet 15 vers sa première position.

Des variantes de dispositifs de transmission 17a, 17b peuvent être envisagées. Par exemple, les crémaillères 19a, 19b pourraient engrener directement avec les troisièmes roues dentées 33a, 33b, les deuxièmes roues dentées 32a, 32b étant alors supprimées. Les dispositifs de transmission 17a, 17b pourraient aussi comporter un nombre impair différent de trois, de roues dentées engrenant entre elles, selon l'amplification souhaitée du pivotement du deuxième clapet 16 lors de la translation du premier clapet 15. Les crémaillères 19a, 19b pourraient aussi engrener directement avec les premières roues dentées 31a, 31b assujetties au deuxième clapet 16. Le dispositif d'introduction d'aliments 1 peut comporter un seul des deux dispositifs de transmission 17a, 17b ; la présence des deux dispositifs de transmission 17a, 17b sera toutefois privilégiée pour une bonne répartition des efforts entre le premier clapet 15 et le deuxième clapet 16. Selon une autre variante, les deuxièmes roues dentées 32a, 32b pourraient être remplacées par des galets (non illustrés) venant directement en contact avec la face inférieure 18 du premier clapet 15, ce qui permettrait de supprimer les crémaillères 19a, 19b. Ces galets disposeront d'un coefficient de frottement suffisant pour éviter leur glissement sur la face inférieure 18 du premier clapet 15 durant la translation du premier clapet 15 selon l'axe de translation X2.

L'appareil 100 pourrait être d'un autre type, par exemple un hachoir, sur le même principe de fonctionnement que celui décrit précédemment.

La présente invention n'est nullement limitée aux exemples de réalisation décrits et à leurs variantes, mais englobe de nombreuses modifications dans le cadre des revendications.

## Revendications

1. Dispositif d'introduction d'aliments (1) pour appareil (100) de préparation culinaire, ledit appareil (100) comprenant une enceinte de travail (106) dans laquelle est logé un outil rotatif (102), le dispositif d'introduction d'aliments (1) comprenant :
- une goulotte (4) d'introduction d'aliments comprenant une première ouverture (9) permettant d'introduire les aliments et un premier conduit (13) débouchant à une première extrémité supérieure (13a) sur la première ouverture (9) et à une première extrémité inférieure (13b) sur l'enceinte de travail (106), pour acheminer lesdits aliments de la première ouverture (9) jusqu'à l'enceinte de travail (106),
- un premier clapet (15) monté en translation selon un axe de translation (X2) par rapport à la goulotte (4) entre une première position d'obturation de la première ouverture (9) et une deuxième position de libération de la première ouverture (9),
**caractérisé en ce que** le dispositif d'introduction d'aliments (1) comprend :
- un deuxième clapet (16) monté à pivotement selon un premier axe de rotation (X5) par rapport à la goulotte (4) entre une première position de libération du premier conduit (13) et une deuxième position d'obturation au moins partielle du premier conduit (13),
- au moins un dispositif de transmission (17a, 17b) agencé entre le premier clapet (15) et le deuxième clapet (16) et configuré pour que la translation du premier clapet (15) de sa première position vers sa deuxième position entraîne le pivotement du deuxième clapet (16) de sa première position vers sa deuxième position et, inversement, pour que la translation du premier clapet (15) de sa deuxième position vers sa première position entraîne le pivotement du deuxième clapet (16) de sa deuxième position vers sa première position.

2. Dispositif d'introduction d'aliments (1) selon la revendication 1, **caractérisé en ce que** le au moins un dispositif de transmission (17a, 17b) est un dispositif de transmission à crémaillère.

3. Dispositif d'introduction d'aliments (1) selon la revendication 2, **caractérisé en ce que** le au moins un dispositif de transmission (17a, 17b) comprend une crémaillère (19a, 19b) agencée parallèlement à l'axe de translation (X2) et assujettie au premier clapet (15), une première roue (31a, 31b) montée rotative selon le premier axe de rotation (X5) et assujettie au deuxième clapet (16), la crémaillère (19a, 19b) engrenant directement ou par l'intermédiaire d'un mécanisme de transmission avec la première roue dentée (31a, 31b).

4. Dispositif d'introduction d'aliments (1) selon la revendication 3, **caractérisé en ce que** le mécanisme de transmission comprend une deuxième roue dentée (32a, 32b) montée rotative selon un deuxième axe de rotation (X6) et engrenant avec la crémaillère (19a, 19b), une troisième roue dentée (33a, 33b) montée rotative selon ledit deuxième axe de rotation (X6) et assujettie à la deuxième roue dentée (32a, 32b), une quatrième roue dentée (34a, 34b) montée rotative selon un troisième axe de rotation (X7) et engrenant avec la troisième roue dentée (33a, 33b), d'une part, et avec la première roue dentée (31a, 31b), d'autre part.

5. Dispositif d'introduction d'aliments (1) selon l'une quelconques des revendications 1 à 4, **caractérisé en ce que** le au moins un dispositif de transmission (17a, 17b) comprend un mécanisme ralentisseur, notamment un ralentisseur à graisse (40), permettant de freiner la translation du premier clapet (15) et le pivotement du deuxième clapet (16).

6. Dispositif d'introduction d'aliments (1) selon l'une quelconque des revendications 1 à 5, **caractérisé en ce que** le deuxième clapet (16) pivote d'un angle de l'ordre de 120° entre sa première position et sa deuxième position lors d'une translation du premier clapet (15) entre sa première position et sa deuxième position.

7. Dispositif d'introduction d'aliments (1) selon l'une quelconque des revendications 1 à 6, **caractérisé en ce que** la première ouverture (9) et le premier conduit (13) sont dimensionnés pour que le deuxième clapet (16) libère un passage du premier conduit (13) d'une section correspondant à au moins 90% de la section de la première ouverture (9), de préférence 100%, lorsque le premier clapet (15) obture ladite première ouverture (9).

8. Dispositif d'introduction d'aliments (1) selon l'une quelconque des revendications 1 à 7, **caractérisé en ce qu'**il comprend, d'une part, un corps (2) ouvert à une extrémité supérieure (6) et incorporant le premier conduit (13) et, d'autre part, un capot (8) fermant partiellement l'extrémité supérieure (6) dudit corps (2) de sorte à définir la première ouverture (9) à l'extrémité supérieure (6) dudit corps (2).

9. Dispositif d'introduction d'aliments (1) selon l'une quelconque des revendications 1 à 8, **caractérisé en ce que** la goulotte (4) comprend une deuxième ouverture (11) de plus petite dimension que la première ouverture (9) et un deuxième conduit (14) rectiligne débouchant à une deuxième extrémité supérieure (14a) sur la deuxième ouverture (11) et à une deuxième extrémité inférieure (14b) à proximité de la première extrémité inférieure (13b) du premier conduit (13).

10. Dispositif d'introduction d'aliments (1) selon la revendication 9, **caractérisé en ce que** le deuxième clapet (16) obture au moins partiellement le deuxième conduit (14) dans sa première position et libère le deuxième conduit (14) dans sa deuxième position.

11. Dispositif d'introduction d'aliments (1) selon la revendication 10, **caractérisé en ce que** le deuxième clapet (16) comporte une encoche (46) permettant l'insertion d'un poussoir (45) au travers dudit deuxième clapet (16) dans sa première position, en insérant ledit poussoir (45) par la deuxième ouverture (11).

12. Dispositif d'introduction d'aliments (1) selon l'une quelconque des revendications 1 à 11, **caractérisé en ce qu'**il comprend un système de butée limitant la translation du premier clapet (15) entre sa première position et sa deuxième position.

13. Dispositif d'introduction d'aliments (1) selon l'une quelconque des revendications 1 à 12, **caractérisé en ce qu'**il comprend un système de maintien (53) du premier clapet (15) dans sa première position.

14. Appareil (100) de préparation culinaire comprenant un réceptacle (101), un outil rotatif (102) agencé dans le réceptacle (101) et un dispositif d'introduction d'aliments (1) comportant un couvercle (3) prévu pour fermer le réceptacle (101), **caractérisé en ce que** le dispositif d'introduction d'aliments (1) est conforme à l'une au moins des revendications 1 à 13.

15. Appareil (100) selon la revendication 14, dans lequel l'outil rotatif (102) est une vis de pressage permettant d'extraire du jus des aliments.
